# EUROPÄISCHE PATENTSCHRIFT

(11) **EP 1 268 187 B1**
(45) Veröffentlichungstag und Bekanntmachung des Hinweises auf die Patenterteilung: **08.04.2009**
(21) Anmeldenummer: 01911630.0
(22) Anmeldetag: 10.02.2001
(51) Int. Cl.: B32B 7/06, B32B 33/00

(54) **VERPACKUNG FÜR WIRKSTOFFHALTIGE PFLASTER**
PACKAGING FOR A PLASTER CONTAINING ACTIVE INGREDIENTS
EMBALLAGE POUR EMPLATRES CONTENANT DES AGENTS ACTIFS

(30) Priorität: 22.02.2000 DE 10007942
(43) Veröffentlichungstag der Anmeldung: 02.01.2003
(73) Patentinhaber: LTS LOHMANN Therapie-Systeme AG, 56626 Andernach (DE)
(72) Erfinder: LAUX, Wolfgang, 65582 Diez (DE)
(74) Vertreter: Flaccus, Rolf-Dieter
(86) Internationale Anmeldenummer: PCT/EP2001/001487
(87) Internationale Veröffentlichungsnummer: WO 2001/062489

(56) Entgegenhaltungen:
- WO-A-95/07816
- WO-A-95/07817
- JP-A- 50 092 982
- US-A- 3 690 909

## Beschreibung

Die Erfindung betrifft ein Packmittel und eine Verpackung für wirkstoffhaltige Pflaster, insbesondere für transdermale therapeutische Systeme. Die Erfindung umfaßt ferner Verfahren zur Herstellung eines solchen Packmittels und einer solchen Verpackung, sowie ein Verfahren zum Verpacken von wirkstoffhaltigen Pflastern unter Verwendung der erfindungsgemäßen Packmittel.

Transdermale therapeutische Systeme (TTS) sind wirkstoffhaltige bzw. arzneistoffhaltige Pflaster und als solche im Markt eingeführt. Wegen ihrer Fähigkeit, pharmakologisch wirksame Substanzen über einen längeren Zeitraum hinweg in steuerbarer Weise über die Haut an den Körper abzugeben, weisen sie eine Reihe von Vorteilen gegenüber anderen Arzneiformen auf.

TTS verfügen in der Regel über haftklebende Schichten, mit denen eine Befestigung auf der Haut ermöglicht werden soll. Während der Lagerung und vor der Applikation auf die Haut sind diese Schichten auf der Klebeseite mit einer abziehbaren Schutzschicht bedeckt. Diese kann jedoch nicht oder nicht völlig verhindern, daß während der Lagerung infolge des "kalten Flusses" - und in verstärktem Maße bei leicht erhöhten Temperaturen - insbesondere an den seitlichen Randbereichen geringfügige Mengen des haftklebenden Materials austreten. Dies kann dazu führen, daß die TTS an der Innenseite der sie umgebenden Verpackung festkleben, was wiederum die Handhabung bei der Entnahme aus der Verpackung erschwert und zur Zerstörung eines TTS führen kann. Dadurch entstehen vermeidbare Kosten, und zudem wird die Akzeptanz dieser Arzneiformen bei den Anwendern beeinträchtigt.

Weitere Anforderungen an Verpackungen, welche für TTS geeignet sind, ergeben sich aus der Tatsache, daß TTS auch flüchtige Inhaltsstoffe, z.B. flüchtige Wirkstoffe oder Hilfsstoffe, enthalten können, deren Abgabe an die Umgebung verhindert werden muß. Ebenso muß ausgeschlossen werden, daß Inhaltsstoffe des TTS mit dem Verpackungsmaterial reagieren, und umgekehrt.

Aus diesen Gründen erfolgt die Verpackung von TTS üblicherweise in sogenannten Siegelbeuteln, welche aus einer Doppellage eines Laminates bestehen. Dabei weist dieses Laminat mindestens zwei, in der Regel jedoch mehrere Schichten auf.
Gewöhnlich ist die nach innen weisende Schicht siegelfähig ausgerüstet. Sehr häufig wird bei der Verpackung von TTS eine Randeinsiegelung unter Anwendung von Hitze vorgenommen, wodurch eine nahezu homogene Verbindung der Siegelschichten des oberen und unteren Siegellaminates erreicht wird.
Alternativ ist prinzipiell auch eine Kaltsiegelung möglich, beispielsweise unter Einsatz von Feuchtigkeit, Lösemitteln oder sonstigen Kontakthilfsmitteln, z.B. bekannten Kaltsiegelmassen.

Um die geforderte Dichtigkeit gegen Verluste von teilweise flüchtigen Wirk- oder sonstigen Inhaltsstoffen zu bewirken, werden die üblichen für die Verpackung von TTS verwendeten Packstoffe zusätzlich mit einer Barriereschicht (Sperrschicht) ausgestattet. Diese stellt in der Regel die auf die Siegelschicht folgende nächstinnere Schicht dar. Die Barriereschicht kann z.B. aus einer durchgehenden Metallschicht (meist Aluminium) bestehen, jedoch kann grundsätzlich auch ein diffusionsdichtes Kunststoffmaterial wie z.B. Polyethylenterephthalat in Frage kommen.
Zusätzlich können die Verpackungen mit weiteren Schichten versehen sein, die in der Regel außenseitig angebracht sind, und die z.B. aus Papier oder Kunststoffolien bestehen können. Sie dienen beispielsweise der verbesserten Bedruckbarkeit, der Sicherheit vor unerwünschtem Zerreißen (Kindersicherheit) oder einer ästhetisch ansprechenden Gestaltung.

Ein Nachteil der aus dem Stand der Technik bekannten Verpackungen ist das Fehlen jeglicher Vorrichtungen, welche das Ankleben oder Festkleben des in der Verpackung befindlichen TTS an der Innenseite der Verpackung bzw. des Packstoffes verhindert. Dies ist problematisch, da es eine Reihe von TTS oder Wirkstoffpflastern gibt, die wegen ihrer Zusammensetzung oder Inhaltsstoffe eine spezielle Empfindlichkeit aufweisen und dazu neigen, am Packstoff anzukleben.

Zwar kann ein Festkleben an der Innenseite der Verpackung grundsätzlich dadurch verhindert werden, daß diese mit einer Silikonbeschichtung versehen wird. Da jedoch Silikone nicht siegelfähig sind, muß beim Herstellungsprozeß darauf geachtet werden, daß die zu versiegelnden Ränder des Packmittels nicht silikonisiert werden, d.h. diese Packmittel werden nur mit einer partiellen, nicht durchgehenden Silikonisierung versehen. Dies erfordert zum einen ein entsprechendes Herstellungsverfahren, welches silikonfreie Ränder erzeugt, und zum anderen hat dies zur Folge, daß beim Verpacken der TTS ein exaktes Positionieren auf der abhäsiv ausgerüsteten Fläche des zu versiegelnden Packstoffes erforderlich ist.

Zur Lösung dieses Problems wird mit der Erfindung vorgeschlagen, daß bei einem Packmittel in Form eines Verpakkungslaminates mit den im Oberbegriff des Anspruchs 1 genannten allgemeinen Merkmalen die siegelfähige innere Schicht mit einer durchgehenden abhäsiven Beschichtung versehen ist.

Dies wird vorzugsweise dadurch erreicht, daß die siegelfähige Schicht mit einem Silikonfilm oder einer Silikonschicht als abhäsive Beschichtung, z.B. in Form eines Silikonfilms, versehen wird. Durch die genannten Maßnahmen wird erreicht, daß die siegelfähige Schicht mit einer abhäsiven (oder anti-adhäsiven) Oberfläche ausgestattet wird. Damit die abhäsiv ausgestattete Schicht siegelfähig bleibt, muß die Dicke der Silikonschicht möglichst gering sein. Überraschenderweise wurde gefunden, daß ein Siegeln der so beschichteten siegelfähigen Schicht möglich ist, solange die Dicke der Silikonschicht nicht größer als 10 µm, vorzugsweise kleiner als 5 µm ist.

Gemäß Anspruch 1 handelt es sich bei dem erfindungsgemäßen Packmittel um ein Verpackungslaminat, welches mindestens zwei Schichten aufweist, nämlich eine siegelfähige Schicht und eine undurchlässige Sperrschicht. Als "siegelfähige Schicht" (auch Siegelschicht genannt) des Verpackungslaminats wird diejenige Schicht bezeichnet, die bei der daraus hergestellten Verpackung die Innenwand dieser Verpackung bildet. Infolge der abhäsiven, d.h. anti-adhäsiven Beschichtung dieser Innenwand wird die Gefahr vermindert, daß das in der Verpackung befindliche TTS an der Innenwand der Verpackung anhaftet. Falls dennoch ein leichtes Anhaften auftreten sollte, beispielsweise infolge längerer Lagerung oder erhöhter Temperaturen, wird durch die abhäsive Beschichtung das zerstörungsfreie Ablösen des TTS wesentlich erleichtert.

Die durchgehende, d.h. vollflächige, abhäsive Beschichtung der Siegelschicht bedeutet auch eine Vereinfachung des Herstellungs- und Verpackungsverfahrens gegenüber den aus dem Stand der Technik bekannten Packstoffen mit nur partieller Silikonisierung, insbesondere deshalb, weil es beim Verpakken nicht auf ein exaktes Positionieren der TTS auf der abhäsiv ausgerüsteten Fläche des Packmittels ankommt.

Die Sperrschicht der erfindungsgemäßen Packmittel ist im wesentlichen gas-, luft-, wasserdampf und/oder feuchtigkeitsundurchlässig, um einen optimalen Schutz für das zu verpackende TTS zu gewährleisten. Die für die Herstellung solcher Sperrschichten, ebenso wie die für die Herstellung von siegelfähigen Schichten geeigneten Materialien sind dem Fachmann grundsätzlich bekannt.
Neben der Sperrschicht und der abhäsiv ausgerüsteten siegelfähigen Schicht kann das erfindungsgemäße, als Verpakkungslaminat vorliegende Packmittel auch noch weitere, zusätzliche Schichten aufweisen, wobei allerdings die abhäsive Innenschicht stets die Innenseite der Verpackung bildet.

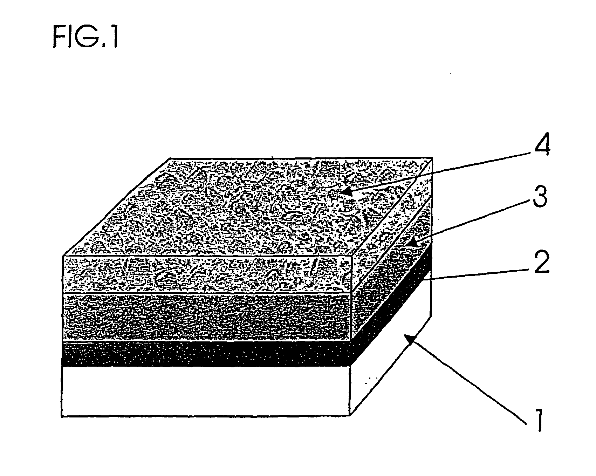

Eine beispielhafte Ausführungsform eines erfindungsgemäßen Packmittels in Form eines Verpackungslaminates ist in Fig. 1 abgebildet.
Dabei bezeichnet (1) die äußere Schicht bzw. die äußeren Schichten des Laminatverbunden, (2) die Sperrschicht, (3) die Siegelschicht, und (4) die auf die Siegelschicht aufgetragene abhäsive Schicht bzw. den abhäsiven Film.

Die Herstellung der erfindungsgemäßen Packmittel kann auf verschiedene Weise erfolgen. Grundsätzlich kann die Herstellung des Verpackungslaminates mit Hilfe von Verfahren erfolgen, welche für die Herstellung mehrschichtiger Laminate gebräuchlich sind. In der Regel handelt es sich dabei um kontinuierliche Verfahren.
Ein bevorzugtes Herstellungsverfahren sieht vor, daß das zur Herstellung der Siegelschicht dienende Grundmaterial durch Anwendung von Scherung, Lösemitteln oder Wärme auf eine vorgefertigte Sperrschicht oder auf ein Intermediärsubstrat aufgetragen wird. Dies kann mittels verschiedener bekannter Auftragstechniken bewerkstelligt werden.

Nach gegebenenfalls erfolgter Trocknung wird Silikon oder eine silikonhaltige Lösung mittels Sprühverfahren oder unter Verwendung eines anderen Auftragverfahrens auf die vorgefertigte Siegelschicht aufgetragen, so daß sich auf dieser ein abhäsiver Film oder eine abhäsive Schicht ausbildet. Ebenso kann Silikon oder eine silikonhaltige Lösung auf die genannte Art auf die Oberfläche einer Siegelschicht aufgetragen werden, die in einem Schichtverbund in Form eines Verpackungslaminats vorliegt. Vorzugsweise wird nach dem Auftragen der silikonhaltigen Lösung das in der erzeugten Silikonschicht bzw. im Silikonfilm enthaltene Lösemittel durch Trocknen entfernt.

Das Silikon kann als Einkomponenten-Silikonlösung, als Zweikomponenten-Silikonlösung, als Silikonöl und/oder als silikonhaltige Lösung, die mit anderen Polymeren (z.B. Polybutylen, Polyisobutylen) vermischt ist, eingesetzt werden.
Ferner-können an Stelle von Silikon auch andere abhäsive Kunststoffe verwendet werden, z.B. Fluorethylenpolymere. Die gebildete abhäsive Schicht besitzt vorzugsweise eine Dicke von weniger als 10 µm. Besonders bevorzugt ist eine Dicke von weniger als 5 µm.

Um TTS mittels der erfindungsgemäßen Packmittel zu verpakken, werden die bereits vereinzelten TTS jeweils zwischen zwei Verpackungslaminate eingebracht, derart, daß das TTS zwischen den abhäsiven Oberflächen der siegelfähigen Schichten zu liegen kommt. Anschließend werden die Verpakkungslaminate in den Randbereichen versiegelt. Dadurch entstehen Siegelbeutel, in deren Innenraum sich ein TTS befindet, wobei der Innenraum - der mit dem TTS in Berührung kommen kann - mit abhäsiven Oberflächen versehen ist.

Die Erfindung beschränkt sich nicht auf die Verpackung von TTS oder wirkstoffhaltigen Pflastern, vielmehr können die erfindungsgemäßen Verpackungslaminate oder Verpackungen auch für die Verpackung anderer Produkte mit vergleichbaren Eigenschaften vorteilhaft eingesetzt werden. Hierzu zählen vor allem solche Produkte, welche bei der Lagerung, möglicherweise unter dem Einfluß erhöhter Umgebungstemperaturen, dazu neigen, eine Oberflächenklebrigkeit auszubilden oder klebrige Inhaltsstoffe an die Oberfläche abzusondern. Dabei kommen neben Medizinprodukten oder Arzneiformen auch Kosmetik- oder Hygieneprodukte, sowie Lebensmittel in Betracht.

Die Erfindung wird durch Fig. 1 näher erläutert.

### Fig. 1

Es ist beispielhaft ein erfindungsgemäßes Packmittel in Form eines mehrschichtigen Verpackungslaminats abgebildet, wobei die Schichten in Schnittdarstellung bezeichnet sind.
(1) bezeichnet die äußere Schicht bzw. die äußeren Schichten des als Packmittel bezeichnenden Laminatverbundes. Hierfür geeignete Materialien sind z.B. Papier, Polyethylenterephthalat (PET) oder Polyethylenfolie.
(2) bezeichnet die Sperrschicht, die im wesentlichen wasserdampfundurchlässig ist. Geeignet hierfür ist beispielsweise Aluminiumfolie.
(3) bezeichnet die Siegelschicht. Als Grundmaterial ist z. B. Polyurethan, Surlyn, PE, PAN, Barex geeignet.
(4) bezeichnet die auf die Siegelschicht aufgetragene abhäsive Schicht bzw. den abhäsiven Film. Hierbei handelt es sich vorzugsweise um einen durchgehenden Silikonfilm bzw. eine Silikonschicht mit einer Schichtdicke von vorzugsweise weniger als 5 µm.

Die Unterseite des abgebildeten Laminates, d.h. Schicht (1) bildet nach erfolgter Einsiegelung die Außenseite des

Siegelbeutels, während die abhäsive Schicht (4) die Innenseite der erfindungsgemäßen Verpackung darstellt.

## Patentansprüche

1. Packmittel in Form eines Verpackungslaminats für die Verpackung von transdermalen therapeutischen Systemen, mindestens umfassend eine siegelfähige Schicht (3) und eine Sperrschicht (2), **dadurch gekennzeichnet, daß** die siegelfähige Schicht (3) mit einem Silikonfilm, einer Silikonschicht oder einer Schicht eines Fluorethylenpolymers als durchgehende abhäsive Schicht (4) versehen ist, wobei die abhäsive Schicht (4) eine Dicke von weniger als 10 µm aufweist.

2. Packmittel nach Anspruch 1, **dadurch gekennzeichnet, daß** die abhäsive Schicht (4) eine Dicke von weniger als 5 µm aufweist.

3. Packmittel nach Anspruch 1 oder 2, **dadurch gekennzeichnet, daß** die abhäsive Schicht (4) mittels Sprühauftrag erzeugt wird.

4. Packmittel nach einem oder mehreren der vorangehenden Ansprüche, **dadurch gekennzeichnet, daß** die abhäsive Schicht (4) getrocknet vorliegt.

5. Packmittel nach einem oder mehreren der vorangehenden Ansprüche, **dadurch gekennzeichnet, daß** das Verpackungslaminat neben der siegelfähigen Schicht (3), der abhäsiven Schicht (4) und der undurchlässigen Sperrschicht (2) weitere Schichten aufweist.

6. Verpackung für transdermale therapeutische Systeme, **dadurch gekennzeichnet, daß** sie durch luftdichte Randsiegelung von zwei Lagen eines Packmittels in Form eines Verpackungslaminats nach einem der Ansprüche 1 bis 5 erzeugt wurde, wobei die abhäsive Schicht (4) die Innenseite der Verpackung bildet.

7. Verfahren zur Herstellung eines Packmittels für transdermale therapeutische Systeme nach einem der Ansprüche 1 bis 5, wobei in einem kontinuierlichen Verfahren ein Laminat, das mindestens eine siegelfähige Schicht (3) und eine undurchlässige Sperrschicht (2) aufweist, hergestellt wird, **dadurch gekennzeichnet, daß** die siegelfähige Schicht (3) mit einer abhäsiven Beschichtung (4) versehen wird.

8. Verfahren nach Anspruch 7, **dadurch gekennzeichnet, daß** das zur Herstellung der Siegelschicht (3) dienende Grundmaterial durch Anwendung von Scherung, Lösemitteln oder Wärme auf die vorgefertigte Sperrschicht aufgetragen wird.

9. Verfahren nach Anspruch 7, **dadurch gekennzeichnet, daß** die siegelfähige Schicht (3) mit einem Silikonfilm oder einer Silikonschicht versehen wird, vorzugsweise mittels Sprühauftrag.

10. Verfahren nach Anspruch 8 oder 9, **dadurch gekennzeichnet, daß** die Silikonschicht oder der Silikonfilm getrocknet wird.

11. Verfahren zum Verpacken transdermaler therapeutischer Systeme, wobei die TTS zwischen zwei übereinanderliegende Verpackungslaminate eingesiegelt werden, **dadurch gekennzeichnet, daß** hierzu Packmittel in Form eines Verpackungslaminats nach den Ansprüchen 1 bis 5 verwendet werden, und daß die Einsiegelung in der Weise erfolgt, daß die abhäsiven Oberflächen der Siegelschichten zum verpackten TTS hin gerichtet sind.

## Claims

1. Packing material in the form of a packaging laminate for packing transdermal therapeutic systems, at least comprising one sealable layer (3) and a barrier layer (2), **characterised in that** said sealable layer (3) is provided with a silicone film, a silicone layer or a layer of a fluoroethylene polymer in the form of a continuous abhesive layer (4), said abhesive layer (4) having a thickness of less than 10 µm.

2. Packing material according to claim 1, **characterised in that** the abhesive layer (4) has a thickness of less than 5 µm.

3. Packing material according to claim 1 or 2, **characterised in that** the abhesive layer (4) is produced by spray application.

4. Packing material according to one or more of the preceding claims, **characterised in that** the abhesive layer (4) is present in dried form.

5. Packing material according to one or more of the preceding claims, **characterised in that** the packaging laminate comprises further layers in addition to the sealable layer (3), the abhesive layer (4) and the impermeable barrier layer (2).

6. A pack for transdermal therapeutic systems, **characterised in that** it has been produced by air-tight edge sealing of two plies of a packing material in the form of a packaging laminate according to any one of claims 1 to 5, and wherein the abhesive layer (4) forms the inner side of the pack.

7. Method for the production of a packing material for transdermal therapeutic systems according to any one of claims 1 to 5, wherein in a continuous process a laminate comprising at least one sealable layer (3) and one impermeable barrier layer (2) is produced, **characterised by** providing the sealable layer (3) with an abhesive coating (4).

8. Method according to claim 7, **characterised in that** the base material used to produce the sealing layer (3) is applied to the prefabricated barrier layer by using shearing, solvents or heat.

9. Method according to claim 7, **characterised by** providing the sealable layer (3) with a silicone film or a silicone layer, preferably by means of spray application.

10. Method according to claim 8 or 9, **characterised by** drying the silicone layer or the silicone film.

11. Method for packing transdermal therapeutic systems, wherein the TTSs are sealed between two packaging laminates lying one above the other, **characterised by** using packing materials in the form of a packaging laminate according to claims 1 to 5, and by carrying out the sealing in such a manner that the abhesive surfaces of the sealing layers face toward the packaged TTS.

## Revendications

1. Agent d'emballage sous la forme d'un stratifié de conditionnement pour le conditionnement de systèmes thérapeutiques transdermiques, comprenant au moins une couche thermosoudable (3) et une couche barrage (2), **caractérisé en ce que** la couche thermosoudable (3) est munie d'un film de silicone, d'une couche de silicone ou d'une couche d'un polymère de fluoroéthylène à titre de couche anti-adhésive continue (4), la couche anti-adhésive (4) présentant une épaisseur inférieure à 10 µm.

2. Agent d'emballage selon la revendication 1, **caractérisé en ce que** la couche anti-adhésive (4) présente une épaisseur inférieure à 5 µm.

3. Agent d'emballage selon la revendication 1 ou 2, **caractérisé en ce que** la couche anti-adhésive (4) est réalisée à l'aide d'une application par pulvérisation.

4. Agent d'emballage selon une ou plusieurs des revendications précédentes, **caractérisé en ce que** la couche anti-adhésive (4) est présente à l'état séché.

5. Agent d'emballage selon une ou plusieurs des revendications précédentes, **caractérisé en ce que** le stratifié de conditionnement présente des couches supplémentaires outre la couche thermosoudable (3), de la couche anti-adhésive (4) et de la couche barrage imperméable (2).

6. Conditionnement pour des systèmes thérapeutiques transdermiques, **caractérisé en ce qu'**on l'obtient, via un thermosoudage périphérique procurant une étanchéité à l'air de deux couches d'un agent d'emballage sous la forme d'un stratifié de conditionnement selon l'une quelconque des revendications 1 à 5, la couche anti-adhésive (4) formant le côté interne du conditionnement.

7. Procédé pour la fabrication d'un agent d'emballage pour des systèmes thérapeutiques transdermiques selon l'une quelconque des revendications 1 à 5, dans lequel, dans un procédé en continu, on confectionne un stratifié qui présente au moins une couche thermosoudable (3) et une couche barrage imperméable (2), **caractérisé en ce que** la couche thermosoudable (3) est munie d'un revêtement anti-adhésif (4).

8. Procédé selon la revendication 7, **caractérisé en ce qu'**on applique le matériau de base servant à la fabrication de la couche thermosoudable (3) sur la couche barrage préfabriquée, en utilisant un cisaillement, des solvants ou de la chaleur.

9. Procédé selon la revendication 7, **caractérisé en ce que** la couche thermosoudable (3) est munie d'un film de silicone ou d'une couche de silicone, de préférence au moyen d'une application par pulvérisation.

10. Procédé selon la revendication 8 ou 9, **caractérisé en ce qu'**on sèche la couche de silicone ou le film de silicone.

11. Procédé pour le conditionnement de systèmes thérapeutiques transdermiques, dans lequel on insère par thermosoudage les TTS entre deux stratifiés de conditionnement superposés, **caractérisé en ce qu'**on utilise à cet effet des agents d'emballage sous la forme d'un stratifié de conditionnement selon les revendications 1 à 5, et en ce qu'on procède à l'insertion par thermosoudage de telle sorte que les surfaces antiadhésives des couches thermosoudées sont orientées dans la direction du TTS à l'état conditionné.
